# DEMANDE DE BREVET EUROPEEN

(11) **EP 0 651 587 A1**
(43) Date de publication de la demande: **03.05.1995**
(21) Numéro de dépôt: 94402391.0
(22) Date de dépôt: 24.10.1994
(51) Int. Cl.: H04Q 7/38

(54) **Procédé de transfert intercellulaire dans un système cellulaire de radiocommunications mobiles AMRT**

(30) Priorité: 28.10.1993 FR 9312890
(71) Demandeur: ALCATEL MOBILE COMMUNICATION FRANCE, 75008 Paris (FR)
(72) Inventeur: Dupuy, Pierre, F-75017 Paris (FR); Kumar, Vinod, F-75005 Paris (FR)
(74) Mandataire: Pothet, Jean Rémy Emile Ludovic

(57) **Abrégé**

La présente invention concerne un procédé de transfert intercellulaire entre deux cellules, dites ancienne et nouvelle cellules, d'un système cellulaire de radiocommunications mobiles utilisant le principe de l'AMRT, procédé selon lequel une communication entre une station mobile et le système, initialement effectuée, en relation avec l'ancienne cellule, sur un premier canal défini par un premier intervalle de temps sur l'air et un premier ensemble de fréquences comprenant au moins une fréquence, est transférée pour être effectuée, en relation avec la nouvelle cellule, sur un deuxième canal, défini par un deuxième intervalle de temps sur l'air et un deuxième ensemble de fréquences comprenant au moins une fréquence,
caractérisé en ce que les premier et deuxième intervalles de temps sur l'air sont identiques, en ce que les premier et deuxième ensembles de fréquences sont distincts l'un de l'autre, et en ce que le procédé consiste à transmettre, après avoir vérifié que le deuxième intervalle de temps identique au premier intervalle de temps est disponible au niveau de la nouvelle cellule, un message dit d'indication de fréquence indiquant à la station mobile le deuxième ensemble de fréquences, pour que cette dernière poursuive la communication en utilisant le même intervalle de temps et le deuxième ensemble de fréquences.

## Description

La présente invention concerne un procédé de transfert intercellulaire dans un système cellulaire de radiocommunications mobiles, ainsi qu'un dispositif pour la mise en oeuvre de ce procédé.

Dans un tel système de radiocommunications (par exemple un système conforme à la norme GSM), chaque cellule est munie notamment de moyens d'émission/réception de signaux radio ainsi que d'un organe de gestion destiné notamment à la gestion des canaux radio au niveau de la cellule associée ; cet ensemble est dénommé station d'émission/réception de base, ou plus simplement station de base. Les moyens d'émission/réception sont capables d'émettre et de recevoir des signaux radio sur une ou plusieurs fréquences (lorsque le principe du saut de fréquences est appliqué).

Dans les systèmes de radiocommunications appliquant le principe de l'accès multiple à répartition dans le temps (AMRT), les communications sont transmises sur des canaux radio, un canal radio étant caractérisé par un intervalle de temps sur la trame AMRT répété périodiquement et une fréquence de transmission (ou plusieurs fréquences lorsque le saut de fréquences est utilisé dans le système considéré). L'intervalle de temps dans la trame AMRT correspond au niveau des stations mobiles à un intervalle de temps sur l'air.

Lorsqu'une station mobile passe d'une cellule, dite ancienne cellule, à une autre cellule, dite nouvelle cellule, il est nécessaire d'assurer la continuité de la communication en cours, sachant que d'une part la disponibilité des intervalles de temps et d'autre part la ou les fréquences utilisées pour les échanges de données de parole changent au passage d'une cellule à une autre. Un procédé permettant d'assurer une telle continuité est couramment appelé "handover" (en français : transfert intercellulaire) dans le domaine des radiocommunications mobiles.

De manière classique, un procédé de handover consiste à activer un canal radio au niveau de la nouvelle cellule, c'est-à-dire à le mettre à la disposition de la station mobile pour les échanges de données de parole, puis à envoyer un ordre de commande de handover à la station mobile concernée afin que cette dernière utilise le nouveau canal alloué. Suit alors une phase de synchronisation de la station mobile avec la nouvelle station de base.

Après cette phase de synchronisation, la station mobile envoie à la nouvelle station de base un message (dénommé SABM dans la terminologie GSM) d'initialisation des données du contexte de transmission (ces données sont appelées données LAPDm ; pour plus de détails les concernant, on se reportera à l'ouvrage intitulé :"The GSM System for Mobile Communications", de M. MOULY et M.B. PAUTET, aux pages 261-262 et 268 à 277) relatives au nouveau lien logique créé (station mobile - nouvelle station de base). Ce message est acquitté par la nouvelle station de base (par un message dénommé UA dans la terminologie GSM).

Entre l'instant où la station mobile reçoit l'ordre de commande de handover et l'instant où la synchronisation est réalisée, la transmission des données de parole est interrompue, de sorte que l'on doit utiliser des logiciels d'extrapolation de la parole, ou accepter une dégradation importante de la qualité de la parole pendant cette période.

Dans les systèmes de radiocommunications couvrant des zones urbaines où le trafic de communications est très important, on a recours à l'utilisation de cellules de petites dimensions (rayon inférieur au kilomètre, en général de l'ordre de 200 ou 300 m). On comprend bien que dans de tels systèmes, dits microcellulaires, les handovers sont très fréquents puisque, du fait de la faible taille des cellules, la probabilité pour qu'une station mobile traverse plus d'une cellule au cours d'une même communication est importante.

Or la procédure de handover qui vient d'être décrite est longue : la période comprise entre la réception par la station mobile de l'ordre de commande du handover et la fin de la phase de synchronisation a une durée de l'ordre de 100 à 200 ms. Il est tout à fait inacceptable de laisser la qualité de la communication se dégrader pendant une telle durée et plusieurs fois de suite.

Dans ces cas, il est donc nécessaire d'avoir recours à l'extrapolation de la parole ; toutefois, ceci n'est pas satisfaisant car au-delà de 80 ms d'extrapolation de parole, l'utilisateur est capable de percevoir que ce qu'il entend n'est pas ce qui devrait lui être transmis.

Pour pallier ce problème, le brevet EP-0 347 396 propose d'effectuer le handover de telle sorte que la communication se poursuit sur le même intervalle de temps et sur la même fréquence dans la nouvelle cellule.

Cette méthode impose d'avoir à disponibilité en permanence des fréquences identiques au niveau de plusieurs cellules voisines, ou de gérer dynamiquement l'allocation des fréquences en fonction des interférences. Une telle méthode est complexe à mettre en oeuvre dans des systèmes conformes à la norme GSM, notamment du fait des interférences qu'elle risque de générer.

En outre, l'utilisation de cette méthode rend nécessaire la vérification de deux critères : la disponibilité de l'intervalle de temps au niveau de la nouvelle cellule, et la disponibilité de la fréquence au niveau de la nouvelle cellule. La plupart du temps, il y a peu de chances pour que ces deux critères soient satisfaits en même temps, de sorte que cette méthode n'est utilisable que dans des cas très rares.

Un but de la présente invention est de mettre au point un procédé de transfert intercellulaire dans lequel la durée de coupure de la parole est moins longue que dans les procédés classiques.

Un autre but de la présente invention est de mettre au point un procédé de transfert intercellulaire qui peut être mis en oeuvre simplement dans les systèmes conformes à la norme GSM, et dans une proportion importante des cas où un transfert intercellulaire est nécessaire.

La présente invention propose à cet effet un procédé de transfert intercellulaire entre deux cellules, dites ancienne et nouvelle cellules, d'un système cellulaire de radiocommunications mobiles utilisant le principe de l'accès multiple à répartition dans le temps (AMRT), procédé selon lequel une communication entre une station mobile et ledit système, initialement effectuée, en relation avec ladite ancienne cellule, sur un premier canal défini par un premier intervalle de temps sur l'air et un premier ensemble de fréquences comprenant au moins une fréquence, est transférée pour être effectuée, en relation avec ladite nouvelle cellule, sur un deuxième canal, défini par un deuxième intervalle de temps sur l'air et un deuxième ensemble de fréquences comprenant au moins une fréquence, caractérisé en ce que lesdits premier et deuxième intervalles de temps sur l'air sont identiques, en ce que lesdits premier et deuxième ensembles de fréquences sont distincts l'un de l'autre, et en ce que ledit procédé consiste à transmettre, après avoir vérifié que ledit deuxième intervalle de temps sur l'air identique audit premier intervalle de temps sur l'air est disponible au niveau de ladite nouvelle cellule, un message dit d'indication de fréquence indiquant à ladite station mobile ledit deuxième ensemble de fréquences, pour que cette dernière poursuive ladite communication en utilisant le même intervalle de temps sur l'air et ledit deuxième ensemble de fréquences.

Grâce au procédé selon l'invention, le temps d'interruption de la parole passe de 100 ou 200 ms à environ 20 ms (temps nécessaire pour envoyer le message d'indication de fréquence). L'extrapolation peut masquer sans problème une telle coupure de sorte que le transfert intercellulaire est inaudible au niveau des utilisateurs.

En outre, le seul critère à satisfaire est celui de la disponibilité d'un même intervalle de temps sur l'air dans l'ancienne et la nouvelle cellules. Ce critère est vérifié dans un grand nombre de cas, de sorte que le procédé selon l'invention peut s'appliquer dans une proportion importante des cas où le transfert intercellulaire est nécessaire.

Selon l'invention, lorsque les ancienne et nouvelle cellules appartiennent à des sites cellulaires distincts, le procédé consiste en outre, avant l'envoi du message d'indication de fréquence, à activer le deuxième canal au niveau de la nouvelle cellule, et à fournir à un organe de gestion de la nouvelle cellule les données relatives au contexte de la transmission entre la station mobile et l'ancienne cellule.

On évite ainsi une réinitialisation longue de la connexion radio.

D'autres caractéristiques et avantages de la présente invention apparaîtront dans la description suivante d'un procédé selon l'invention, donnée à titre illustratif et nullement limitatif.

Dans les figures suivantes :
- la figure 1 représente schématiquement un détail de la structure d'un système cellulaire de radiocommunications mobiles,
- la figure 2 représente les étapes du procédé selon l'invention lorsque l'ancienne et la nouvelle cellules appartiennent au même site cellulaire,
- la figure 3 représente les étapes du procédé selon l'invention lorsque l'ancienne et la nouvelle cellules n'appartiennent pas au même site cellulaire,
- la figure 4 représente schématiquement un dispositif selon l'invention installé au niveau d'un site cellulaire et destiné à servir d'intermédiaire pour les échanges de données avec les stations mobiles.

Dans toutes ces figures, les éléments communs portent les mêmes numéros de référence.

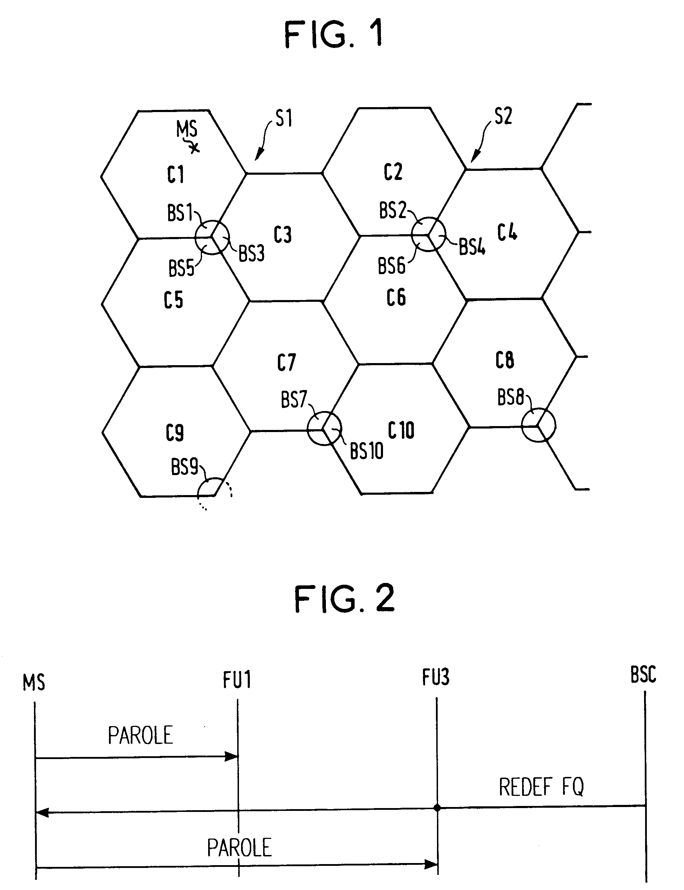

On voit en figure 1 un détail d'un système cellulaire de radiocommunications mobiles, conforme par exemple à la norme GSM. Ce système comprend plusieurs cellules référencées C1 à C10, chaque cellule étant couverte par une station émettrice/réceptrice de base respectivement BS1 à BS10.

Dans les systèmes microcellulaires, les cellules de petites dimensions sont regroupées pour former des sites cellulaires. Dans ce cas, les stations de base associées aux cellules d'un site sont rassemblées en un même endroit, ce qui permet de réduire les coûts d'installation et d'éviter une trop grande redondance matérielle.

Dans l'exemple illustré, on peut observer deux sites cellulaires S1 et S2. Le site S1 rassemble les cellules C1, C3 et C5 de sorte que les stations de base BS1, BS3 et BS5 sont regroupées au même endroit, à l'intersection des trois cellules correspondantes, de manière à être situées sensiblement au centre du site cellulaire. Le site S2 rassemble quant à lui les cellules C2, C4 et C6.

Pour l'application du procédé selon l'invention, les stations de base d'un même site ou de sites cellulaires distincts doivent être synchrones temporellement, c'est-à-dire que les périodes de leurs horloges respectives doivent être les mêmes, sans nécessairement que leurs heures soient identiques (on verra en effet plus loin que cela est nécessaire car la synchronisation de la station mobile ne change pas immédiatement après le transfert intercellulaire selon l'invention).

Dans l'exemple choisi, une station mobile MS se trouve au départ dans la cellule C1, sous la couverture de BS1.

On a représenté en figure 2 les différents étapes du procédé selon l'invention lorsque la nouvelle et l'ancienne stations de base (respectivement BS3 et BS1) se trouvent sur le même site cellulaire (S1).

On rappelle que chaque station de base comprend de manière générale des moyens d'émission/réception et un organe (ou unité) de gestion. Dans ce qui suit en relation avec le procédé selon l'invention illustré en figure 2, l'on dissociera au niveau de la station de base le rôle des unités de gestion de celui des moyens d'émission/réception. On comprendra pourquoi dans la suite.

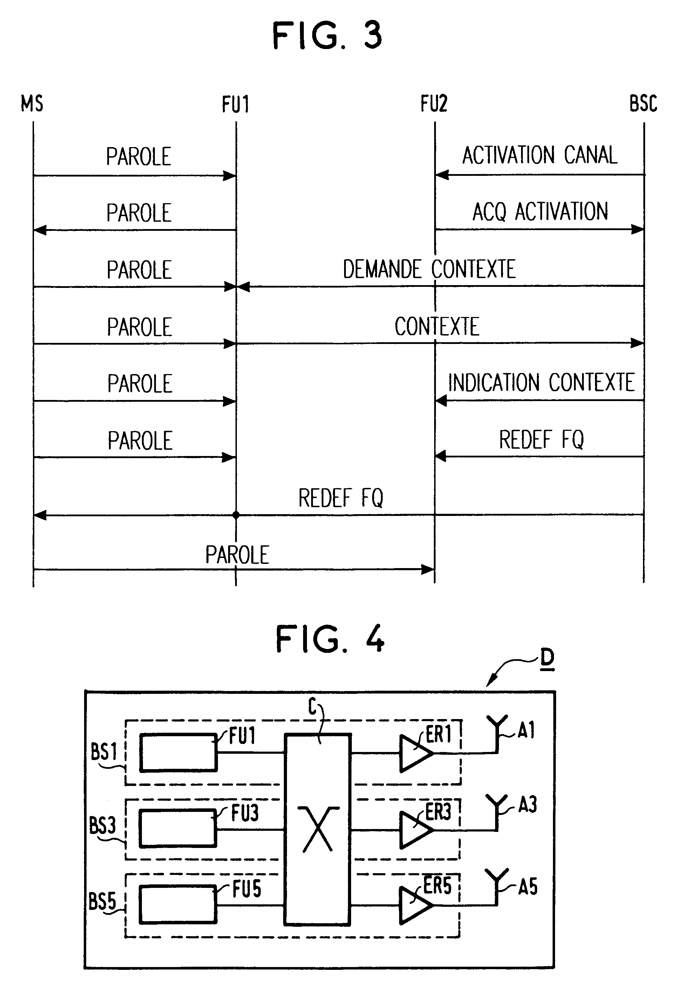

Les unités de gestion des stations de base BS1 et BS3 sont référencées FU1 et FU3, et leurs moyens d'émission/réception ER1 et ER3 (voir figures 2 et 4).

On a référencé BSC un contrôleur de stations de base ayant sous sa charge notamment les stations de base BS1 et BS3. Le contrôleur BSC assure la commande des différentes stations de base qu'il a en charge, et plus précisément la commande des unités de gestion de ces stations de base et par leur intermédiaire celle des moyens d'émission/réception associés.

Lorsqu'il apparaît, par exemple d'après des rapports de mesure (rapport signal à bruit, niveau de réception, etc...) fournis régulièrement par la station mobile MS à la station de base BS1, et vice-versa, que la qualité de la communication en cours par l'intermédiaire des moyens d'émission/réception ER1 de la station de base BS1 est telle qu'un transfert intercellulaire entre la cellule C1 et la cellule C3 est nécessaire, le contrôleur BSC vérifie que l'intervalle de temps sur l'air correspondant au canal radio utilisé par la station mobile MS dans ses échanges de données de parole par l'intermédiaire de la station de base BS1 est également disponible au niveau de la cellule C3, c'est-à-dire qu'il n'est pas utilisé par l'unité de gestion FU3 pour une communication impliquant une autre station mobile se déplaçant dans la cellule C3.

Si tel est le cas, le contrôleur BSC communique, dans un message dit de redéfinition de fréquence (REDEF FQ), constituant de manière générale un message d'indication de fréquence, à l'unité de gestion FU1 de la station de base BS1 la nouvelle fréquence (ou les nouvelles fréquences et leur ordre d'utilisation en fonction du temps lorsque le saut de fréquences est utilisé) à utiliser pour les échanges de données de parole avec la station mobile MS ; il communique également cette nouvelle fréquence à la station mobile MS, par l'intermédiaire de l'unité de gestion FU1. Il est également possible que l'unité de gestion FU1 ayant reçu le message REDEF FQ le communique directement à la station mobile MS sans que le contrôleur BSC ait à envoyer un nouveau message REDEF FQ.

Le ou les messages REDEF FQ communiqués à l'unité de gestion FU1 et à la station mobile MS indiquent également à ces dernières à quel instant le changement de fréquence doit être effectué (on rappelle qu'à cet effet, les stations de base des cellules entre lesquelles le transfert doit être effectué sont synchrones temporellement).

Ensuite, la station mobile MS n'a qu'à changer ses fréquences d'émission et de réception en fonction du contenu du message REDEF FQ pour poursuivre la communication par l'intermédiaire de l'unité de gestion FU1 et des moyens d'émission/réception ER3 de BS3 (voir figure 4). Elle poursuit la communication en cours sur le même intervalle de temps sur l'air, de sorte que, le handover peut être pratiquement transparent pour la station mobile MS.

On rappelle que le message de redéfinition de fréquence ("Frequency Redefinition") est utilisé classiquement dans les systèmes conformes à la norme GSM, lorsque la planification des fréquences en fonction des cellules est modifiée ; il est alors émis pour informer à la fois les stations de base concernées, pour qu'elles utilisent les nouvelles fréquences, et les stations mobiles.

Ainsi, le procédé selon l'invention permet d'utiliser en les adaptant des ressources radio disponibles au niveau du système.

Le temps d'interruption de la parole est ramené à 20 ms (durée du message de redéfinition de fréquence à destination de MS). Avant l'émission de ce message, la station mobile MS peut continuer à échanger des données de parole par l'intermédiaire de FU1 et ER1. A partir de l'instant indiqué par ce message, MS poursuit la communication en cours par l'intermédiaire de FU1 et ER3. Il peut éventuellement alors émettre un message pour acquitter le changement de fréquence effectué.

Le dispositif D regroupant les stations de base du site cellulaire S1 et adapté pour la mise en oeuvre de la présente invention est représenté schématiquement en figure 4. Chaque station de base BS1, BS3 et BS5 (dont le contour est représenté en trait interrompu) comprend une unité de gestion (Frame Unit), respectivement FU1, FU3 et FU5, pour la gestion des canaux radio de la station de base associée (en général, une unité de gestion assure la gestion de huit canaux radio), et un émetteur/récepteur de signaux radio (ou plusieurs lorsque le principe du saut de fréquences est appliqué dans le système de radiocommunications considéré), respectivement ER1, ER3 et ER5, chacun étant muni d'une antenne A1, A3 et A5.

Selon l'invention, le site S1 comprend en outre un commutateur C connecté d'une part à la sortie de chaque unité FU1, FU3 et FU5, et d'autre part à l'entrée de chaque émetteur/récepteur ER1, ER3 et ER5. Le commutateur C est commandé par les unités de gestion, notamment après la réception des messages de redéfinition de fréquence. Ainsi, après réception d'un message de redéfinition de fréquence tel que défini en relation avec la figure 2, l'unité FU1 de la station de base BS1 est commutée de ER1 à ER3.

Grâce à l'invention, on peut en effet conserver avant et après le transfert intercellulaire la même unité de gestion puisque l'intervalle de temps sur l'air utilisé par la station mobile MS reste le même, seule la fréquence (ou les fréquences) utilisée changeant.

En revanche, il est possible que le numéro de l'intervalle de temps associé à la communication en cours sur la trame AMRT ne soit pas le même avant et après le handover. Dans ce cas, même si rien ne change pour la station mobile (l'intervalle de temps sur l'air est conservé, c'est-à-dire que la station mobile émet et reçoit toujours aux mêmes instants), la gestion temporelle assurée par l'unité de gestion considérée (FU1) doit être adaptée de manière à ce que l'organisation temporelle (notamment la répartition entre les sous-canaux de trafic et les sous-canaux de signalisation dédiés) du canal radio sur la trame TDMA correspondant à cet intervalle de temps sur l'air et utilisé en relation avec la cellule C1 soit conservée.

L'invention permet en outre, de manière avantageuse par rapport à l'art antérieur, d'équiper le site cellulaire de moins d'unités de gestion qu'il n'y a de cellules. Les unités de gestion sont alors partagées entre les différentes cellules d'un même site, ce qui procure une économie en termes de coût de matériel, et un meilleur rendement du système.

Toutefois, il reste toujours possible de conserver le lien de dépendance initial entre les unités de gestion et les cellules associées, c'est-à-dire de ne pas partager les unités de gestion même lorsque le transfert intercellulaire est effectué entre cellules d'un même site (par exemple lorsque les stations de base ne sont pas regroupées en un même endroit pour les cellules d'un même site). Dans ce cas, le procédé selon l'invention est identique à celui qui sera décrit plus loin en relation avec la figure 3.

Toujours grâce à l'invention, dans le cas d'application décrit en relation avec la figure 2, les échanges sur l'interface Abis (entre les unités de gestion des stations de base et le contrôleur BSC) sont simplifiés puisque seul le message de redéfinition de fréquence est nécessaire lors du handover entre cellules d'un même site ; en effet, comme cela vient d'être expliqué, les messages d'activation du nouveau canal et d'acquittement de cette activation, ainsi que les messages de désactivation de l'ancien canal et d'acquittement de cette désactivation n'ont plus lieu d'être. On enlève ainsi du procédé classique de transfert intercellulaire tout ce qui n'est pas nécessaire quand les équipements de gestion de la communication (unité de gestion) peuvent rester inchangés au cours de cette dernière.

De plus, le procédé selon l'invention ne rend nécessaire la vérification que d'un seul critère : la disponibilité de l'intervalle de temps utilisé en relation avec la cellule C1 au niveau de le cellule C3 ; il n'est plus en effet nécessaire de vérifier que la même fréquence est disponible, puisque la fréquence utilisée après le handover est une fréquence allouée à la nouvelle cellule. Le procédé selon l'invention a donc plus de probabilité d'être applicable que celui décrit dans l'art antérieur cité dans le préambule. En pratique, entre un tiers et la moitié des handovers, selon le motif cellulaire utilisé, peut être effectuée selon le procédé de l'invention.

Le procédé selon l'invention permet en outre d'éviter à la station mobile d'avoir à émettre le message SABM, puisqu'il n'y a pas de nouveau lien logique créé, la station mobile continuant d'être rattachée à la même unité de gestion. Ainsi, la procédure de handover s'en trouve encore simplifiée.

On vient de décrire le procédé selon l'invention utilisé lorsque les ancienne et nouvelle cellules appartiennent au même site cellulaire.

Lorsque les ancienne et nouvelle cellules (par exemple C1 et C2) n'appartiennent pas au même site, le procédé selon l'invention est celui illustré en figure 3.

Ici, il n'est plus nécessaire de dissocier le rôle de l'unité de gestion de celui de l'émetteur/récepteur au niveau des stations de base, puisque, les deux stations de base appartenant à des sites cellulaires différents, le partage de certains organes n'est plus possible.

Le contrôleur BSC, après avoir vérifié la disponibilité au niveau de BS2 de l'intervalle de temps sur l'air utilisé pour la communication par l'intermédiaire de BS1, active, par l'intermédiaire de l'unité de gestion FU2 (message ACTIVATION CANAL), le nouveau canal au niveau de BS2, ce nouveau canal utilisant l'intervalle de temps sur l'air utilisé en relation avec BS1. L'activation du nouveau canal est acquittée (message ACQ ACTIVATION) par la station de base BS2.

Ensuite, le contrôleur BSC demande (message DEMANDE CONTEXTE) à l'ancienne station de base BS1 les données du contexte de transmission (notamment les données LAPDm concernant le lien logique MS-BS1, et les données concernant le lien physique MS-BS1, comme par exemple la puissance d'émission de la station mobile MS, la puissance d'émission de BS1, l'information d'avance temporelle, ou Timing Advance dans la terminologie GSM, utilisée en relation avec BS1, etc...).

Ensuite, la station de base BS1 fournit au BSC, dans un message CONTEXTE, les données demandées, le BSC les retransmettant à la station de base BS2 dans un message INDICATION CONTEXTE.

Le procédé se poursuit alors avec l'émission par le BSC d'un message REDEF FQ à destination de BS2, et d'un autre message REDEF FQ à destination de MS, par l'intermédiaire de BS1.

Ici encore, la communication n'est interrompue que pendant l'émission du message REDEF FQ à destination de la station mobile MS. Auparavant, la station mobile poursuit les échanges de données de parole avec BS1, et après, à partir de l'instant indiqué dans le message REDEF FQ, elle les poursuit avec BS2.

Le procédé selon l'invention permet donc encore dans ce cas d'obtenir un gain en terme de durée d'interruption de la parole.

En outre, les messages SABM et UA sont inutiles puisque les données LAPDm ne sont pas réinitialisées mais transmises à BS2.

De manière générale, le procédé selon l'invention permet donc de supprimer, lors des transferts intercellulaires, les coupures de longue durée dues à la nécessité de réinitialiser le canal radio. En effet :
- dans le cas du handover entre deux cellules d'un même site, on peut supprimer la procédure de connexion sur la nouvelle cellule en conservant le même organe de gestion (unité de gestion) de sorte que le changement de cellule se résume alors à un changement de fréquence dans la station de base (et bien entendu dans la station mobile),
- dans le cas du handover entre deux cellules n'appartenant pas au même site, la procédure de connexion sur la nouvelle cellule implique seulement le transfert à la nouvelle station de base du contexte nécessaire pour maintenir la liaison radio, logique et physique, ainsi que le changement de fréquence.

On peut en outre constater que le procédé selon l'invention permet également de supprimer la phase de synchronisation.

En effet, dans un réseau microcellulaire, compte tenu de la taille réduite des cellules, le fait que la station mobile MS conserve la même synchronisation (même Timing Advance) avec BS1 et BS2 n'introduit qu'une erreur faible et tolérable pendant un temps limité puisque la synchronisation est périodiquement corrigée même en cours de communication.

L'erreur commise correspond à l'erreur de distance égale à la différence entre l'éloignement effectif entre la station mobile MS et la station de base BS2 au moment du handover, et l'éloignement correspondant à la synchronisation appliquée en relation avec BS1.

Par ailleurs, lors du transfert intercellulaire entre deux cellules d'un même site, C1 et C3 par exemple, du fait du regroupement des moyens d'émission/réception, le Timing Advance utilisé reste identique avant et après le transfert, de sorte que la suppression de la phase de synchronisation ne pose aucun problème.

Le procédé selon l'invention est donc plus avantageux dans un système microcellulaire.

Pour être adapté à la mise en oeuvre du procédé selon l'invention, le contrôleur BSC doit comprendre :
- des moyens pour vérifier si l'intervalle de temps sur l'air utilisé en relation avec l'ancienne cellule est disponible au niveau de la nouvelle cellule,
- dans le cas de transfert intercellulaire entre deux sites cellulaires différents, des moyens pour l'activation du nouveau canal au niveau de la nouvelle cellule, et des moyens pour la demande et l'indication des données du contexte de transmission,
- des moyens pour élaborer et envoyer les messages de redéfinition de fréquence.

Ces moyens peuvent être incorporés dans le contrôleur BSC sous forme de modifications logicielles impliquant un fonctionnement adapté à l'invention des moyens déjà existants au sein du BSC.

La station mobile n'est pas affectée par ces changements, puisqu'elle est conçue dans les systèmes GSM pour être capable de réagir à un message de redéfinition de fréquence.

Pour la mise en oeuvre optimale du procédé selon l'invention, il est préférable que la gestion de l'allocation des canaux radio soit optimisée, de sorte qu'un intervalle de temps sur l'air soit disponible dans un maximum de cellules en même temps.

Bien évidemment, l'invention n'est pas limitée au mode de réalisation qui vient d'être décrit.

En particulier, il n'est pas nécessaire, même si cela est avantageux, d'utiliser un message de redéfinition de fréquence pour indiquer la ou les nouvelles fréquences à utiliser après le handover. Il est possible de concevoir un nouveau message adapté uniquement à cet effet.

Par ailleurs, lorsque l'on parle de la fréquence d'un canal, il s'agit de manière équivalente de l'ensemble de fréquences associé à ce canal dans le cas de l'application du principe du saut de fréquences.

En outre, l'invention s'applique également au cas où le transfert intercellulaire doit être effectué entre des cellules se trouvant sous la commande de contrôleurs BSC différents.

Enfin, on pourra remplacer tout moyen par un moyen équivalent sans sortir du cadre de l'invention.

## Revendications

**1/** Procédé de transfert intercellulaire entre deux cellules, dites ancienne et nouvelle cellules, d'un système cellulaire de radiocommunications mobiles utilisant le principe de l'accès multiple à répartition dans le temps (AMRT), procédé selon lequel une communication entre une station mobile et ledit système, initialement effectuée, en relation avec ladite ancienne cellule, sur un premier canal défini par un premier intervalle de temps sur l'air et un premier ensemble de fréquences comprenant au moins une fréquence, est transférée pour être effectuée, en relation avec ladite nouvelle cellule, sur un deuxième canal, défini par un deuxième intervalle de temps sur l'air et un deuxième ensemble de fréquences comprenant au moins une fréquence, caractérisé en ce que lesdits premier et deuxième intervalles de temps sur l'air sont identiques, en ce que lesdits premier et deuxième ensembles de fréquences sont distincts l'un de l'autre, et en ce que ledit procédé consiste à transmettre, après avoir vérifié que ledit deuxième intervalle de temps sur l'air identique audit premier intervalle de temps sur l'air est disponible au niveau de ladite nouvelle cellule, un message dit d'indication de fréquence indiquant à ladite station mobile ledit deuxième ensemble de fréquences, pour que cette dernière poursuive ladite communication en utilisant le même intervalle de temps sur l'air et ledit deuxième ensemble de fréquences.

**2/** Procédé selon la revendications 1 caractérisé en ce que, lorsque ledit système est un système conforme à la norme GSM, le message d'indication de fréquence est un message de redéfinition de fréquences.

**3/** Procédé selon l'une des revendications 1 ou 2 caractérisé en ce que ledit message d'indication de fréquence indique en outre à ladite station mobile à quel instant elle doit commencer à utiliser ledit deuxième ensemble de fréquences.

**4/** Procédé selon l'une des revendications 1 à 3 caractérisé en ce que ladite communication n'est interrompue que durant l'émission à destination de ladite station mobile dudit message d'indication de fréquence.

**5/** Procédé selon l'une des revendications 1 à 4 caractérisé en ce que, lorsque lesdites ancienne et nouvelle cellules appartiennent à des sites cellulaires distincts, ledit procédé consiste en outre, avant l'envoi dudit message d'indication de fréquence, à activer ledit deuxième canal au niveau de ladite nouvelle cellule, et à fournir à un organe de gestion de ladite nouvelle cellule les données relatives au contexte de la transmission entre la station mobile et l'ancienne cellule.

**6/** Procédé selon la revendication 5 caractérisé en ce que lesdites données sont transférées de l'unité de gestion associée à ladite ancienne cellule à ladite unité de gestion associée à ladite nouvelle cellule.

**7/** Procédé selon l'une des revendications 5 ou 6 caractérisé en ce que lesdites données relatives au contexte de la transmission concernent le lien physique et le lien logique entre ladite station mobile et ladite ancienne cellule.

**8/** Dispositif pour la mise en oeuvre du procédé selon l'une des revendications 1 à 7, comprenant, pour les cellules d'un même site, des moyens d'émission/réception des signaux radio pour chacune desdites cellules, fonctionnant chacun sur l'un desdits ensembles de fréquences,
caractérisé en ce qu'il comprend en outre un organe de gestion, destiné notamment à la gestion des canaux radio, et utilisé en commun par chacune desdites cellules dudit site, et des moyens de commutation, de sorte que, lors du transfert intercellulaire entre ladite ancienne cellule et ladite nouvelle cellule, ledit organe de gestion est commuté à l'aide desdits moyens de commutation des moyens d'émission/réception associés à ladite ancienne cellule aux moyens d'émission/réception associés à ladite nouvelle cellule.

**9/** Dispositif selon la revendication 8 caractérisé en ce qu'il comprend au plus autant d'organes de gestion que de cellules appartenant audit site cellulaire.

**10/** Contrôleur de stations de base pour la mise en oeuvre du procédé selon l'une des revendications 1 à 7 caractérisé en ce qu'il comprend :
- des premiers moyens pour vérifier si ledit premier intervalle de temps est disponible au niveau de ladite nouvelle station de base,
- des deuxièmes moyens pour élaborer et envoyer lesdits messages d'indication de fréquence.

**11/** Contrôleur de stations de base pour la mise en oeuvre du procédé selon l'une des revendications 5 à 7 caractérisé en ce qu'il comprend :
- des premiers moyens pour vérifier si ledit premier intervalle de temps est disponible au niveau de ladite nouvelle station de base,
- des deuxièmes moyens pour activer ledit deuxième canal,
- des troisièmes moyens pour demander et indiquer lesdites données du contexte de transmission,
- des quatrièmes moyens pour élaborer et envoyer lesdits messages d'indication de fréquence.
